# EUROPÄISCHE PATENTSCHRIFT

(11) **EP 1 767 803 B1**
(45) Veröffentlichungstag und Bekanntmachung des Hinweises auf die Patenterteilung: **10.10.2012**
(21) Anmeldenummer: 06017850.6
(22) Anmeldetag: 26.08.2006
(51) Int. Cl.: F16D 48/06

(54) **Verfahren zur Kupplungssteuerung**
Method for clutch control
Procédé pour la commande d'un embrayage

(30) Priorität: 23.09.2005 DE 102005045632
(43) Veröffentlichungstag der Anmeldung: 28.03.2007
(73) Patentinhaber: Schaeffler Technologies AG & Co. KG, 91074 Herzogenaurach (DE)
(72) Erfinder: Werner, Olaf, Dr., 77815 Bühl (DE); Stork, Holger, Dr., 77815 Bühl (DE); Küpper, Klaus, Dr., 77815 Bühl (DE)

(56) Entgegenhaltungen:
- FR-A1- 2 812 919
- FR-A1- 2 857 915
- GB-A- 2 125 136
- US-A- 4 621 721
- US-A- 5 993 355
- US-A- 6 148 975
- US-A1- 2002 157 914

## Beschreibung

Die vorliegende Erfindung befasst sich mit einem Verfahren zur Kupplungssteuerung, wobei ein Getriebe, das der Kupplung zugeordnet ist, sich in einer Neutralstellung befindet und ein Kupplungspedal zur Steuerung der Kupplung unbetätigt ist.

Im Allgemeinen wird zur Steuerung einer Fahrzeugkupplung ein Kupplungspedal verwendet. Wird dies betätigt, so öffnet sich die Kupplung und der Drehmomentübertrag vom Fahrzeugmotor zum Getriebe verringert sich. Wird das Kupplungspedal hingegen nicht betätigt, so ist die Kupplung geschlossen und der mögliche Drehmomentübertrag über die Kupplung ist maximal, der Fahrzeugmotor ist also über die Kupplung mit dem Getriebeeingang verbunden.

Befindet sich weiter das Getriebe, das der Kupplung zugeordnet ist, in einer neutralen Position, ist also kein Gang eingelegt, so ist der Getriebeeingang nicht mit dem Getriebeausgang verbunden und steht deshalb nicht unter Last. Ist nun bei einer geschlossenen Kupplung das Getriebe in Neutralstellung, so ist der Fahrzeugmotor mit dem Getriebeeingang verbunden. Da am Getriebeeingang keine Last anliegt, können schon kleine Schwingungsamplituden am Getriebeeingang Spieldurchgänge im Getriebe hervorgerufen. Dies kann zu unerwünschter Geräuschentwicklung, so genannten Getrieberasseln, führen.

Im Stand der Technik werden nun Zwei-Massen-Schwungräder oder eine spezielle Leerlaufstufe im Dämpfer der Kupplung verwendet, um den Getriebeeingang von solchen Schwingungen zu isolieren und so die unerwünschten Geräusche zu vermeiden. Dennoch können auch dabei innerhalb der Bautoleranzen Geräusche auftreten, da die Isolation des Getriebes vom Fahrzeugmotor durch solche konstruktiven Maßnahmen nur unzureichend ist.

Die Patentschrift US 6,148,975 offenbart, dass bei Leerlaufdrehzahl im Neutralgang sowie unbetätigtem Kupplungspedal vorgesehen ist, dass die Kupplung geöffnet wird. Die Patentschrift US 4,621,721 offenbart, dass bei Verlassen des Kupplungspedals bei Neutralgang die Kupplung geöffnet bleibt.

Es ist die Aufgabe der Erfindung eine zumindest teilweise vorteilhaftere Abkoppelung des Getriebes vom Fahrzeugmotor zu ermöglichen.

Die Lösung dieser Aufgabe ergibt sich aus den Merkmalen des kennzeichnenden Teils des ersten Anspruch. Vorteilhafte Weiterbildungen der Erfindung ergeben sich aus den Unteransprüchen.

Gemäß der Erfindung wird die Kupplung so gestellt, dass der Drehmomentübertrag der Kupplung auf das Getriebe geringer ist, als der durch die Stellung des Kupplungspedals angeforderte Drehmomentübertrag. Wird das Kupplungspedal nicht betätigt, so entspricht der durch die Stellung des Kupplungspedals angeforderte Drehmomentübertrag dem Drehmomentübertrag der geschlossenen Kupplung. Damit wäre der Getriebeeingang maximal mit dem Fahrzeugmotor gekoppelt und es können Schwingungen übertragen werden, die unerwünschte Geräusche hervorrufen. Erfindungsgemäß wird die Kupplung nun weiter geöffnet, also in eine Position gebracht, in der das übertragene Drehmoment geringer ist, als das von dem Kupplungspedal angeforderte. Dadurch wird der Fahrzeugmotor vom Getriebeeingang zumindest teilweise abgekoppelt. Ein Drehmomentübertrag durch die Kupplung auf den Getriebeeingang ist in dieser Situation auch nicht nötig, da durch die Neutralstellung des Getriebes das Drehmoment nicht an die Antriebsräder weitergegeben wird. Aufgrund dieser Abkopplung werden weniger Schwingungen auf den Getriebeeingang übertragen und die Geräuschentwicklung wird verringert. Weiter kann evtl. auf konstruktive Maßnahmen zur Schwingungsisolation im Leerlauf verzichtet werden, was den Kupplungsaufbau vereinfachen und/oder verbilligen kann.

Vorteilhaft wird eine Gangeinlegeverhinderung vorgesehen, die verhindert, dass während der fehlenden Betätigung des Kupplungspedals ein Gang eingelegt werden kann. Dadurch wird der Fahrer gehindert, trotz der zumindest teilweise geöffneten Kupplung einen Gang einzulegen und das Fahrzeug dazu zu bringen sich fortzubewegen. Dies entspricht den Erwartungen des Fahrers, der anhand des nicht betätigten Kupplungspedals davon ausgeht, daß die Kupplung geschlossen ist und deshalb kein Gang eingelegt werden kann.

In einer Ausführungsform wird die Kupplung offen gehalten. Befindet sich das Getriebe in einer Neutralstellung und wird das Kupplungspedal nicht betätigt, also nicht durch den Fahrer durchgedrückt, verfährt eine elektronische Kupplungssteuerung (clutch by wire) die Kupplung in Richtung offen. So wird der Getriebeeingang vom Fahrzeugmotor abgekoppelt und es werden keine Schwingungen mehr auf den Getriebeeingang übertragen. Der Geräuschentwicklung wird somit effizient entgegengewirkt.

Weiter kann die Kupplung so geregelt werden, dass ein vorbestimmter Schlupf auftritt. Der Schlupf wird dabei so bestimmt, dass die Drehzahl am Getriebeeingang um einen vorbestimmten Betrag kleiner ist, als die Drehzahl der Motorwelle. Die Fahrzeugmotor ist so zumindest teilweise vom Fahrzeugmotor abgekoppelt und die Geräusche verursachenden Schwingungen werden gedämpft. Auch befindet sich die Kupplung in einem optimalen Bereitschaftspunkt, um die Kupplung schnell schließen zu können und so der Stellung des Kupplungspedals zu entsprechen. Dies erlaubt den entsprechenden Aktionen des Fahrers, wenn er das Kupplungspedal betätigt, schnell folgen zu können. Da am Getriebeeingang durch den Drehmomentübertrag der Kupplung eine Drehzahl anliegt, das Getriebe sich jedoch in einer Neutralstellung befindet, besteht eine Drehzahldifferenz zwischen dem Getriebeeingang und dem Gangrad des Getriebes. Schon allein durch diese Drehzahldifferenz kann verhindert werden, dass ein Gang eingelegt wird. Dies entspricht auch den Erfahrungen des Fahrers, der davon ausgeht, dass bei einem unbetätigten Kupplungspedal das Gangeinlegen nicht möglich ist.

Bevorzugt kann ein Regler bei Anlegen der Synchronisation die Kupplung weiter schließen. Der Regler regelt dabei über den Öffnungsgrad der Kupplung den Schlupf der Kupplung. Der Schlupf wird dabei über einen Getriebeeingangswellensensor, der die Drehzahl der Getriebeeingangswelle misst und der Drehzahl des Motors errechnet. Wird die Drehzahldifferenz, also der Schlupf, zu groß, so wird die Kupplung weiter geschlossen, wird der Schlupf zu klein, so wird die Kupplung weiter geöffnet. Versucht der Fahrer nun aus der Neutralstellung des Getriebes heraus einen Gang einzulegen, so verringert die Synchronisierung die Drehzahl am Getriebeeingang. Dies führt zu einer größeren Drehzahldifferenz zwischen Getriebeeingang und Motor, worauf der Regler die Kupplung weiter schließt. Als Ergebnis erhöht sich die Drehzahl am Getriebeeingang und es kann trotz Synchronisierung kein Gang eingelegt werden. Der Fahrer wird also daran gehindert, ohne Betätigung des Kupplungspedals von Neutral in einen Fahrgang zu wechseln. Dadurch wird eine unbeabsichtigte Betätigung des Fahrzeugs verhindert.

Auch kann eine Schaltabsichterkennung vorgesehen sein und die Kupplung, sobald der Schalthebel zum Einlegen eines Ganges bewegt wird, in Abhängigkeit der Schalthebelwegstrecke weiter geschlossen werden. Eine Schaltabsichterkennung kann dabei ein Potentiometer oder jedes andere Mittel sein, das die Entfernung des Schalthebels von der neutralen Mittelstellung misst. Vorteilhafterweise kann aus Kostengründen ein einziger Schalter vorgesehen sein, der das Abweichen von der Nullstellung anzeigt. Alternativ können zwei Schalter vorgesehen sein, wobei einer das Abweichen von der Nullstellung und der Zweite das Einlegen eines Gangs anzeigt. Belässt der Fahrer den Schalthebel in der neutralen Mittelstellung und betätigt nicht das Kupplungspedal, so bleibt die Kupplung erfindungsgemäß in der Position, die das Getriebe zumindest teilweise von dem Fahrzeugmotor abkoppelt. Betätigt der Fahrer nun den Schalthebel, so misst die Schaltabsichtserkennung die Auslenkung des Schalthebels von der neutralen Schalthebelposition. Diese Auslenkung bzw. die Steigung dieser Auslenkung kann nun der Kupplungssteuerung übertragen werden, die in Antwort darauf die Kupplung entsprechend schließt. So kann auch ohne einen Getriebeeingangswellensensor oder zusätzlich zu dem oben genannten, auf die Getriebeeingangsdrehzahl basierenden Mechanismus das Einlegen eines Gangs ohne Betätigung des Kupplungspedals verhindert werden.

Bevorzugt gibt die Kupplungspedalstellung an, wie weit die Kupplung mindestens geöffnet ist. Ist das Kupplungspedal unbetätigt, so kann die Kupplungssteuerung die Kupplung in eine Stellung zwischen ganz offen und ganz geschlossen verfahren. Wird jedoch das Kupplungspedal betätigt, so gibt die Pedalstellung einen Öffnungsgrad der Kupplung vor, der von der Kupplungssteuerung nicht unterschritten werden kann. Ist dieser Öffnungsgrad nun größer als der von der Kupplungssteuerung vorgesehene, so wird die Kupplung entsprechend der Stellung des Kupplungspedals verfahren. Somit kann der Fahrer trotz Kupplungssteuerung die Kupplung entsprechend seiner Erfahrung betätigen und wird nicht durch die Kupplungssteuerung daran gehindert, die Kupplung zu öffnen. Auch wird verhindert, dass die Kupplung z.B. bei einer langsamen Betätigung des Kupplungspedals zuerst geschlossen wird, um der Pedalstellung zu entsprechen um dann wieder geöffnet zu werden, damit ein Gang eingelegt werden kann.

Weitere Einzelheiten, Merkmale und Vorteile ergeben sich aus der nachfolgenden Beschreibung eines besonderen Ausführungsbeispiels.

In dem vorliegenden Ausführungsbeispiel ist das Kupplungspedal des Fahrzeugs nicht betätigt und das Getriebe befindet sich in einer Neutralposition, d.h. es ist kein Gang eingelegt. Unter Verwendung eines Getriebeeingangswellensensors wird die Drehzahl der Getriebeeingangswelle gemessen. Die Kupplung wird nun zur Vermeidung von Getrieberasseln durch eine Steuerung soweit geöffnet, bis eine vorbestimmte Drehzahldifferenz (Schlupf) zwischen der Motorwelle und der Getriebeeingangswelle auftritt. Durch eine entsprechende Regelung wird der Schlupf der Kupplung entsprechend dem Sollschlupf (z.B. 50 U/min) gehalten. Dieser Regler ist ein stark nichtlinearer Regler, mit einem großen Proportionalanteil bei Unterschreiten der vorbestimmten Getriebedrehzahlgrenzen (z.B. bei Getriebedrehzahlen, die kleiner als 500 U/min sind, bei einer Motorleerlaufzahl von 800 U/min und einem Sollschlupf von 50 U/min). Dadurch wird bei Absinken der Getriebedrehzahlen die Kupplung stark in Richtung geschlossen verfahren und so das Einlegen eines Gangs verhindert. Versucht der Fahrer dennoch einen Gang einzulegen, so erkennt dies ein, als eine Schaltabsichtserkennung ausgebildeter, Potentiometer, der Position des Schalthebels und dessen Bewegung misst. Das Signal der Schaltabsichtserkennung wird an einen nichtlinearen Regler weitergegeben, der aufgrund der Bewegung des Schalthebels (D-Anteil des Signals) die Kupplung in Richtung geschlossen verfährt. So wird weiter das Einlegen des Ganges zumindest erschwert.

Um sichergehen zu können, dass das Einlegen eines Ganges bei nicht betätigtem Kupplungspedal keine negativen Auswirkungen hat, wird der Fahrzeugmotor abgeschaltet, falls es dem Fahrer doch gelänge einen Gang bei nicht betätigtem Kupplungspedal einzulegen. Dabei wird das Einlegen des Gangs über eine Gangsensorik erfasst und an die Kupplungssteuerung weitergegeben. Diese läst dann der Motorsteuerung den entsprechenden Befehl zum Abschalten des Motors zukommen.

Will der Fahrer nun einen Gang einlegen, so wird er das Kupplungspedal treten. Somit gibt das Kupplungspedal einen Mindestöffnungsgrad an die Kupplung vor. Überschreitet dieser Mindestöffnungsgrad den von der Kupplungssteuerung vorgesehenen Öffnungsgrad, so wird die Kupplung entsprechend der Stellung des Kupplungspedals verfahren. Die Kupplungssteuerung kann also maximal das von der Kupplungspedalstellung vorgegebene Drehmoment einstellen. Wird das Kupplungspedal durchgedrückt, so wird die Kupplung ganz geöffnet und Gangeinlegeverhinderung aufgehoben. Der Fahrer kann wie gewohnt den Gang einlegen und die erfindungsgemäße Kupplungssteuerung wird beendet.

## Patentansprüche

1. Verfahren zur Kupplungssteuerung, wobei ein Getriebe, das der Kupplung zugeordnet ist, sich in einer Neutralstellung befindet und ein Kupplungspedal zur Steuerung der Kupplung unbetätigt ist, wobei der angeforderte Drehmomentübertrag bei unbetätigtem Kupplungspedal dem Drehmomentübertrag der geschlossenen Kupplung entspricht, wobei die Kupplung durch die Kupplungssteuerung so gestellt wird, dass der Drenmoment-übertrag der Kupplung auf das Getriebe geringer ist, als durch das Kupplungspedal angefordert ist **dadurch gekennzeichnet, dass** eine Gangeinlegeverhinderung verhindert, dass während der fehlenden Betätigung des Kupplungspedals ein Gang eingelegt wird, wobei die Kupplung so geregelt wird, dass ein vorbestimmter Schlupf auftritt, und wobei bei anschließender Betätigung des Kupplungspedals die Kupplungspedalstellung vorgibt, wie weit die Kupplung mindestens geöffnet ist wenn dieser Öffnungsgrad gröβer als der von der Kupplungsteuerung vorgesehene ist.

2. Verfahren nach einem der vorhergehenden Ansprüche, **dadurch gekennzeichnet, dass** ein Regler bei Anlegen der Synchronisation die Kupplung weiter schließt.

3. Verfahren nach einem der vorhergehenden Ansprüche, **dadurch gekennzeichnet, dass** eine Schaltabsichtserkennung vorgesehen ist und die Kupplung sobald der Schalthebei zum Einlegen eines Ganges bewegt wird, in Abhängigkeit der Schalthebelwegstrecke weiter geschlossen wird.

## Claims

1. Method for clutch control, wherein a transmission which is assigned to the clutch is in a neutral position and a clutch pedal for controlling the clutch is not actuated, wherein the demanded torque transfer when the clutch pedal is not actuated corresponds to the torque transfer of the closed clutch, wherein the clutch is set by means of the clutch control such that the torque transfer of the clutch to the transmission is lower than that demanded by means of the clutch pedal, **characterized in that** a gear engagement prevention means prevents a gear from being engaged during the absence of actuation of the clutch pedal, wherein the clutch is regulated such that a predetermined degree of slip arises, and wherein, upon subsequent actuation of the clutch pedal, the clutch pedal position predefines the minimum extent to which the clutch is opened, if said degree of opening is greater than that provided by the clutch control.

2. Method according to the preceding claim, **characterized in that** a regulator closes the clutch further upon activation of the synchronization.

3. Method according to one of the preceding claims, **characterized in that** a shift intention identification means is provided, and when the shift lever for engaging a gear is moved, the clutch is closed further as a function of the shift lever travel.

## Revendications

1. Procédé pour la commande d'un embrayage, dans lequel une boîte de vitesses, qui est associée à l'embrayage, se trouve dans une position neutre et une pédale d'embrayage pour la commande de l'embrayage n'est pas actionnée, le transfert de couple demandé correspondant, lorsque la pédale d'embrayage n'est pas actionnée, au transfert de couple de l'embrayage fermé, l'embrayage étant réglé par la commande d'embrayage de telle sorte que le transfert de couple de l'embrayage à la boîte de vitesses soit inférieur à celui demandé par la pédale d'embrayage, **caractérisé en ce qu'**un système empêchant l'enclenchement d'un rapport empêche que, pendant l'actionnement défaillant de la pédale d'embrayage, un rapport soit enclenché, l'embrayage étant réglé de telle sorte qu'un glissement prédéterminé ait lieu et lors de l'actionnement subséquent de la pédale d'embrayage la position de la pédale d'embrayage prédéfinissant dans quelle mesure l'embrayage est au moins ouvert lorsque ce degré d'ouverture est supérieur à celui prévu par la commande d'embrayage.

2. Procédé selon la revendication 1, **caractérisé en ce qu'**un dispositif de réglage ferme davantage l'embrayage lors de l'application de la synchronisation.

3. Procédé selon l'une quelconque des revendications précédentes, **caractérisé en ce qu'**il est prévu une reconnaissance d'intention de changement de vitesse et l'embrayage est fermé davantage en fonction de la distance de la course du levier de sélection dès que le levier de sélection est déplacé pour enclencher un rapport.
